Europäisches Patentamt

European Patent Office

Office européen des brevets

(11) Publication number: **0 235 426 B1**

# EUROPEAN PATENT SPECIFICATION

(45) Date of publication of patent specification: **13.11.91**  (51) Int. Cl.⁵: **B01D 51/10, //B05B5/08**

(21) Application number: **86304594.4**

(22) Date of filing: **16.06.86**

(54) Process and device for chilling stream of gas-suspended particles.

(30) Priority: **23.01.86 US 821801**

(43) Date of publication of application:
**09.09.87 Bulletin  87/37**

(45) Publication of the grant of the patent:
**13.11.91 Bulletin  91/46**

(84) Designated Contracting States:
**CH DE FR GB IT LI**

(56) References cited:
**EP-A- 0 237 668          DE-A- 3 221 340**
**FR-A- 2 165 731          GB-A- 1 438 230**
**US-A- 3 279 936          US-A- 4 051 275**

(73) Proprietor: **INTERLOCK CORPORATION**
**9607 Quincy Avenue**
**CLeveland Ohio 44106(US)**

(72) Inventor: **Hoffman, Reinhold**
**Zum Plessbach 36**
**W-4322 Sprockhövel(DE)**
Inventor: **Klimke, Walter**
**Ackenbachstrasse 152**
**W-4000 Düsseldorf(DE)**

(74) Representative: **Abbie, Andrew Kenneth**
**A.A. THORNTON & CO. Northumberland**
**House 303/306 High Holborn**
**London, WC1V 7LE(GB)**

## Description

This invention relates to a process and apparatus for the chilling of a stream of gas suspended particles. More specifically, it relates to the introduction of a supercooled gas into a stream of gas-suspended particles. Still more specifically, it relates to a process and a device particularly suitable for chilling a gas suspension of electrostatically charged particles.

U.S.-A-3,279,936, issued to Clarence W. Forestek on October 18, 1966, is directed to the treating of metal surfaces having crevices or pores therein with perfluorocarbon polymer particles so as to deposit such particles into the pores. By having the metal at a raised temperature to enlarge the pores and the particles chilled to contract them, the particles are interlocked in the pores when the particles and the metal come to an equilibrium temperature whereby the particles are expanded and the pores contracted.

U.S.-A-4,051,275, issued on September 27, 1977 was also granted to Clarence W. Forestek and is directed to applying such chilled particles in a fluid stream carrying finely divided particles applied at a pressure of 2-8 bars (30-120 psi) to compact previously deposited particles and thereafter depositing additional particles in the space freed by the compaction, said additional particles being a temperature at least 37.8°C (100°F) below the temperature of the metal surface so that these additional particles will also be locked into the fissures upon reaching equilibrium temperature.

DE-A-3,221,340 discloses an apparatus for cooling a particle-laden gas by injection of liquid water but does not disclose the use of coolant gas.

It is an object of this invention to produce a chilling effect on such finely divided particles prior to application of the same on said metal surface.

It is also an objective of this invention to effect a chilling effect on a gas suspension of electrostatically charged such particles by the injection of a supercooled gas in the said suspension prior to application of the particles onto the said metal surface.

It is also an objective of this invention to design an effective device for feeding supercooled gas into the said gas suspension of electrostatically charged particles.

According to one aspect of the present invention, there is provided a process for the chilling of a first gas stream having therein suspended finely divided particles characterised by introducing into said first gas stream a second gas stream chilled to a temperature in the range of -20°C to -130°C, and in that said suspended finely divided particles are electrostatically charged.

According to another aspect of the present invention there is provided a device specifically designed for carrying out the above process, capable of being hand-held and capable of being held in a relatively horizontal position, comprising a source of suspending gas, means to introduce particles thereto, a nozzle having a passageway extending linearly therethrough, said gas stream having particles therein being admitted to said passageway at one end thereof, the other end of said passageway comprising the end through which said steam exits from said passageway, characterised in that the device comprises a source of chilling gas, means to cool said gas, an annular passageway to which is fed said chilling gas and encircling said linear passageway but not connecting directly therewith, and a plurality of channels connecting said annular passageway with said linear passageway for the admission of gas from said annular passageway into said linear passageway, whereby the chilled gas admitted through said channels intermingles with the gas suspension passing through said passageway and out.

It has been found out that finely divided particles of perfluorocarbon polymer or graphite, molybdenum sulfate, boron nitride or other suitable particles may be electrostatically charged and then chilled to an appropriately low temperature by the introduction of a supercooled gas into the suspension of particles. Preferably the supercooled gas is the same type of gas as that used as the suspension medium but this is not critical and other suitable gases may be used. A device for effecting the introduction of the supercooled gas in the particle suspension is also described in detail hereinafter.

A companion application (EP-A-0 237 668), filed simultaneously herewith, describes and claims the process and apparatus for spraying chilled electrostatically charged particles onto rotating large metal objects to effect the deposition and compacting of particles in heat enlarged surface pores of the said object and thereby cause interlocking of the particles in the pores as described in the above-cited U.S. Patents.

The electrostatic charge applied to the particles is advantageously in the range of 50-150 kilovolts, preferably about 100 kv. Preferably, the particles are given a positive charge and the object is given a minus potential. However, while this system is preferred, the reverse system of charging is possible. A particularly advantageous device is that described herein. This device comprises a spray gun, such as used for electrostatically spraying paint which has an interior channel through which is passed the spraying medium, in this case the suspension of particles disposed in dry air or inert gas, such as nitrogen, carbon dioxide, etc. This suspension of particles is passed between electrodes which generate an appropriate electrical field to produce the desired electrostatic charges on the particles. Appropriate electrical charge for the electrodes is maintained by a high voltage transformer and condensers.

The electrostatically charged particle suspension is passed into the chilling apparatus in which a supercooled gas is introduced into the suspension. A cooling medium such as liquid nitrogen or solid carbon dioxide is maintained in an adjacent vessel so that supercooling can be effected on the gas which is to be introduced into the gaseous suspension medium. The supercooled gas, preferably the same as used in the original suspension, is introduced into the suspension of electrostatically charged particles during its passage through a chamber or passageway in the chilling apparatus. The supercooled gas introduced into the suspension is desirably maintained at -20°C (-4°F) to -130°C (-202°F), preferably -50°C (-58°F) to -120°C (-184°F).

The spray gun used for applying the electrostatic charge to the particles may be any one of a number of commercial spray guns suitable for spraying electrostatically charged particles. A particularly suitable spray gun is the one marketed under the trademark "GEMA" which has a four electrode and high voltage generating system including a high voltage transformer and a high voltage set of condensers. The cooling attachment is fitted onto the front or spraying end of the spray gun so that as the spray of suspended electrostatically charged particles emanates from the spray gun it passes through a mixing chamber in the chilling apparatus and then out over impact spreading cone.

The polymer suspension stream is advantageously ejected from the spray gun at a pressure of 1-10 bars (15-150 psi). A suspension of particles in the suspension medium is advantageously kept in a storage tank in which the particles are stirred up by feeding in nitrogen or other gas. When the stream is to be applied, the appropriate valve is opened to allow the gas to escape with particles suspended therein and carried to the electrostatically charging chamber of the spray gun prior to mixing with the chilling gas medium. Various other means may be used to feed polymer particles into the gas stream such as Venturi, screw feed, blower, pump, etc.

For particles of $4.7^{-10}$ g or 5 micrometres in size and a voltage of about 80-100 kilovolts applied between the gun and the object it is estimated that the particles have an initial velocity of about 11 meters per second and about 0.09-0.10 meters per second in the vicinity of the workpiece. Smaller sized particles, e.g., of less than 1 micrometre are more favorable since the ultimate speed due to the electrical feed will be higher than for larger particles.

In applying the electrostatic charge it may be advantageous to have a series of electrodes spaced in pairs along the path of the suspended particles with a voltage of approximately 20 kilovolts applied between each pair of electrodes and applied transversely to the direction of flow of the gas.

## SPECIFIC EMBODIMENT OF THE INVENTION

The description of the process and apparatus of this invention are facilitated by reference to the drawings.

Fig. 1 is an elevational front view of a preferred modification of the device and system for effecting cooling of the particles suspension.

Fig. 2 is a side cross-sectional view of the device of Fig. 1 taken at line 2-2.

Fig. 3 is a side elevational view of a spray gun adapted by the device of Figs. 1 and 2 to effect cooling of a gas stream with suspended particles and to supply electrostatic charge to the particles.

Fig. 4 is a top view of the front portion of spray gun shown in Fig. 3

Fig. 5 is a side cross-sectional view of the front portion of the spray gun shown in Figs. 3 and 4 taken at line 5-5 of Fig. 4.

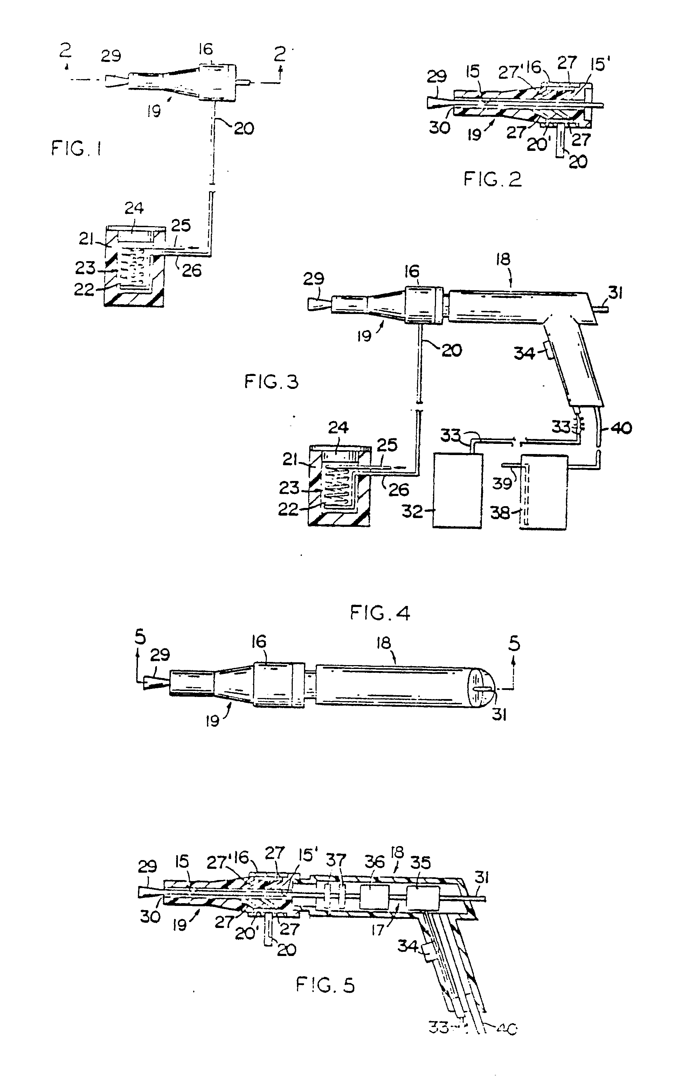

Figs. 1 and 2 show the spray gun attachment 19 which is designed to effect cooling of a gas stream carrying finely divided particles which are already electrostatically charged or about to be electrostatically charged. The cooling nozzle 15 is preferably made of polytetrafluoroethylene (PTFE). Metal ring or band 16 slides over the exterior of a portion of the spray gun attachment 19 to hold gas entrance duct 20 in position. Cold gas such as nitrogen is fed into the spray gun from cooling tank 21 which preferably consists of a rigid, expanded polyurethane foam in which a heat exchange coil 22 is positioned in cooling chamber 23. The coil is advantageously made of copper tubing having a diameter of about 10 mm. Cover 24 closes the chamber to reduce the admission of heat. The coolant contained in the cooling chamber is advantageously either dry ice (solid carbon dioxide) or liquid nitrogen. When the gas inlet line 25 is opened, gaseous nitrogen, or other preferred gas, flows through cooling coil 22 and the cooled gas (preferably at -70 - -140°C) flows through hose connector 26 to gas entrance duct 20 attached to and communicating with the recessed portion 20' running around the circumference of the mixing chamber 15 and feeding cold gas through channels 27 into the interior of chamber 15 of cooling attachment 19.

Figs. 3, 4 and 5 show the equipment of Figs. 1 and 2 attached to electrostatic spray gun 18. High voltage preferably in the range of 70-120 kv is developed in generator 32 and transmitted through lines 33 into the interior of the spray gun through switch 34 to high voltage condenser cascade 35 and then through high voltage transformer 36 to electrodes 37. Meanwhile particles of the desired size and type are stored in reservoir 38 maintained in suspended state by gas admitted by line 39 at the bottom of the reservoir from which the gas stream conveys the suspended particles through hose 40 into the spray gun where they are electrostatically charged as they pass between electrodes 37 into mixing channel 15 where the particles are chilled to the desired low temperature by mixture with the cold gas being admitted through duct 20.

The mixing device of this invention is found to operate very efficiently in chilling the electrostatically charged particles emanating from an electrostatic spray gun. It is preferable to have the cooling equipment positioned after the spray gun. Otherwise the chilled gas suspension would have to pass through the electrostatic charging equipment thereby chilling the electrodes and other parts coming into contact with the chilled gas suspension and also effecting some rise in temperature in the chilled suspension. However where such effects are not critical or may be offset the chilling equipment may be positioned prior to the electrostatically charging apparatus. In such cases obvious appropriate changes would be made in the positioning and arrangement of the apparatus described herein. Nevertheless the cooling device will have the same essential elements described herein.

## Claims

1. A process for the chilling of a first gas stream having therein suspended finely divided particles characterised by introducing into said first gas stream a second gas stream chilled to a temperature in the range of -20°C to -130°C, and in that said suspended finely divided particles are electrostatically charged.

2. A process as claimed in claim 1, characterised in that said suspended particles are polymeric perfluourocarbon.

3. A process as claimed in claim 1, characterised in that said suspended particles are boron nitride.

4. A process as claimed in any one of claims 1 to 3, characterised in that said temperature is in the range of -50°C to -120°C.

5. A device (19) specifically designed for carrying out the process of claim 1, capable of being hand-held and capable of being held in a relatively horizontal position comprising a source (39) of suspending gas, means (38) to introduce particles thereto, a nozzle having a passageway (15) extending linearly therethrough, said gas stream having particles therein being admitted to said passageway at one end thereof, the other end (30) of said passageway comprising the end through which said stream exits from said passageway, characterised in that the device comprises a source (25) of chilling gas, means (21) to cool said gas, an annular passageway (20) to which is fed said chilling gas and encircling said linear passageway but not connecting directly therewith, and a plurality of channels (27) connecting said annular passageway (20) with said linear passageway (15) for the admission of gas from said annular passageway (20) into said linear passageway, whereby the chilled gas admitted through said channels (27) intermingles with the gas suspension passing through said passageway and out.

6. A device as claimed in claim 5, characterised in that said annular passageway (20) communicates with and is connected to a feed line (20) from a reservoir having a gas supply therein and having a cooling means therein whereby the gas contained therein is supercooled before admission into said feed line (20).

7. A device as claimed in claim 5, characterised in that said inlet channel (27) communicates with and is connected to a feed line (20) from a reservoir, said reservoir having a gas supply and a cooling means therein whereby the gas contained therein is chilled before admission into said feed line (20).

8. A device as claimed in claim 6 or 7, characterised in that said reservoir has a cooling coil (22) therein in which said gas may be contained and cooled by said cooling means, said coil (22) communicating with and connected to said feed line (20).

9. A device as claimed in any one of claims 5 to 8, characterised in that the said one end of said linear passageway (15) is connected to and communicates with the exit end of a spray gun adapted to discharge electrostatically charged particles.

## Revendications

1. Procédé pour refroidir un premier courant gazeux contenant en suspension des particules finement divisées,

   caractérisé par le fait que l'on introduit dans ledit premier courant gazeux un second courant gazeux refroidi à une température valant entre -20°C et -130°C et par le fait que lesdites particules finement divisées en suspension sont chargées électrostatiquement.

2. Procédé comme revendiqué dans la revendication 1, caractérisé par le fait que lesdites particules en suspension sont des particules de perfluorocarbone polymérise.

3. Procédé comme revendiqué dans la revendication 1, caractérisé par le fait que lesdites particules en suspension sont des particules de nitrure de bore.

4. Procédé comme revendiqué dans l'une quelconque des revendications 1 à 3, caractérisé par le fait que ladite température vaut de -50°C à -120°C.

5. Dispositif (19) spécifiquement conçu pour mettre en oeuvre le procédé de la revendication 1, pouvant être tenu à la main et pouvant être tenu dans une position relativement horizontale, comportant une source (39) de gaz porteur, des moyens (38) pour y introduire des particules, une buse présentant un passage (15) qui s'étend linéairement à travers la buse, ledit courant gazeux qui contient des particules étant admis dans ledit passage à sa première extrémité, l'autre extrémité (30) dudit passage constituant l'extrémité par laquelle ledit courant sort hors dudit passage, dispositif caractérisé par le fait qu'il comporte une source (25) de gaz réfrigérant, des moyens (21) pour refroidir ledit gaz, un passage annulaire (20) dans lequel on amène ledit gaz réfrigérant et qui entoure ledit passage linéaire mais n'est pas directement relié avec lui, ainsi qu'une pluralité de canaux (27) reliant ledit passage annulaire (20) avec ledit passage linéaire (15) pour admettre le gaz, en provenance dudit passage annulaire (20), dans ledit passage linéaire, ce par quoi le gaz refroidi admis par lesdits canaux (27) se mélange avec les particules en suspension dans le gaz qui passent par ledit passage et en sortent.

6. Dispositif comme revendiqué dans la revendication 5, caractérisé par le fait que ledit passage annulaire (20) communique avec, et est relié à, une conduite d'amenée provenant d'un réservoir dans lequel se trouve une source de gaz ainsi que des moyens de refroidissement, · ce par quoi le gaz qui y est contenu est superrefroidi avant son admission dans ladite conduite d'amenée (20).

7. Dispositif comme revendiqué dans la revendication 5, caractérisé par le fait que ledit canal d'entrée (27) communique avec, et est relié à, une conduite d'amenée (20) provenant d'un réservoir, une source de gaz ainsi que des moyens de refroidissement se trouvant dans ledit réservoir, ce par quoi le gaz qui y est contenu est refroidi avant son admission dans ladite conduite d'amenée (20).

8. Dispositif comme revendiqué dans la revendication 6 ou 7, caractérisé par le fait que dans ledit réservoir se trouve un serpentin de refroidissement (22) dans lequel ledit gaz peut être contenu et refroidi par lesdits moyens de refroidissement, ledit serpentin (22) communiquant avec, et étant relié à, ladite conduite d'amenée (20).

9. Dispositif comme revendiqué dans l'une quelconque des revendications 5 à 8, caractérisé par le fait que ladite première extrémité dudit passage linéaire (15) est reliée à, et communique avec, l'extrémité de sortie d'un pistolet de pulvérisation adapté à éjecter des particules chargées électrostatiquement.

**Patentansprüche**

1. Verfahren zum Abkühlen eines ersten Gasstromes mit darin fein verteilten, suspendierten Teilchen, gekennzeichnet durch das Einführen eines zweiten Gasstroms, der auf eine Temperatur im Bereich von -20°C bis -130°C abgekühlt ist, in den ersten Gasstrom und dadurch, daß die suspendierten, fein verteilten Teilchen elektrostatisch geladen sind.

2. Verfahren nach Anspruch 1, dadurch gekennzeichnet, daß die suspendierten Teilchen polymerisiertes Perfluorokarbon sind.

3. Verfahren nach Anspruch 1, dadurch gekennzeichnet, daß die suspendierten Teilchen Bornitrid sind.

4. Verfahren nach einem der Ansprüche 1 bis 3, dadurch gekennzeichnet, daß die Temperatur im Bereich von -50°C bis -130°C liegt.

5. Vorrichtung (19), die besonders zum Ausführen des Verfahrens nach Anspruch 1 entwickelt ist und geeignet ist, in der Hand gehalten zu werden, und geeignet ist, in einer relativ horizontalen Stellung gehalten zu werden, mit einer Quelle (39) eines suspendierenden Gases, einer Vorrichtung (38) zum darin Einführen von Teilchen, einer Nase mit einem Durchgang (15), der sich linear dadurch erstreckt, wobei der Gasstrom mit Teilchen darin an einem Ende in den Durchgang gelassen wird, wobei das andere Ende (30) des Durchgangs das Ende umfaßt, durch das der Strom aus dem Durchgang nach außen tritt, dadurch gekennzeichnet, daß die Vorrichtung eine Quelle (25) für Kühlgas, eine Vorrichtung (21) zum Kühlen des Gases, einen ringförmigen Durchgang (20), in den das Kühlgas zugeführt wird und der den linearen Durchgang umgibt aber nicht direkt damit verbunden ist, und eine Mehrzahl von Kanälen (27) umfaßt, die den ringförmigen Durchgang (20) mit dem linearen Durchgang (15) zum Zuführen von Gas aus dem ringförmigen Durchgang (20) in den linearen Durchgang verbindet, wodurch das durch die Kanäle (27) zugeführte, gekühlte Gas sich mit der durch den Durchgang und nach außen gehenden Gassuspension vermischt.

6. Vorrichtung nach Anspruch 5, dadurch gekennzeichnet, daß der ringförmige Durchgang (20) mit einer Zuführleitung (20) von einem Behälter mit einer Gasversorgung darin und einer Kühlvorrichtung darin, durch die das darin enthaltene Gas vor dem Einleiten in die Zuführleitung (20) supergekühlt wird, in Verbindung steht und damit verbunden ist.

7. Vorrichtung nach Anspruch 5, dadurch gekennzeichnet, daß der Einlaßkanal (27) mit einer Zuführleitung (20) von einem Behälter mit einer Gasversorgung darin und einer Kühlvorrichtung darin, durch die das darin enthaltene Gas vor dem Einleiten in die Zuführleitung (20) gekühlt wird, in Verbindung steht und damit verbunden ist.

8. Vorrichtung nach Anspruch 6 oder 7, dadurch gekennzeichnet, daß der Behälter eine Kühlspirale (22) besitzt, in der das Gas enthalten und von der Kühlvorrichtung gekühlt werden kann, wobei die Spirale (22) mit der Zuführleitung (20) in Verbindung steht und damit verbunden ist.

9. Vorrichtung nach einem der Ansprüche 5 bis 8, dadurch gekennzeichnet, daß das eine Ende des linearen Durchlasses (15) mit dem Ausgangsende einer Sprühpistole, die geeignet ist, die elektrostatisch geladenen Teilchen zu verströmen, in Verbindung steht und damit ver-

bunden ist.

FIG. 1

FIG. 2

FIG. 3

FIG. 4

FIG. 5